# NEUE EUROPÄISCHE PATENTSCHRIFT

(11) **EP 0 941 259 B2**
(45) Veröffentlichungstag und Bekanntmachung des Hinweises auf die Entscheidung über den Einspruch: **25.10.2006**
(45) Hinweis auf die Patenterteilung: 24.04.2002
(21) Anmeldenummer: 97951225.8
(22) Anmeldetag: 18.11.1997
(51) Int. Cl.: C08F 220/12, C09J 133/08, B32B 27/30, C08F 220/18, C08F 220/14

(54) **KASCHIERKLEBSTOFFE**
LAMINATION ADHESIVES
ADHESIFS DE CONTRE COLLAGE

(30) Priorität: 29.11.1996 DE 19649383
(43) Veröffentlichungstag der Anmeldung: 15.09.1999
(73) Patentinhaber: BASF Aktiengesellschaft, 67056 Ludwigshafen (DE)
(72) Erfinder: DAMES, Burkhardt, D-56567 Neuwied (DE); SCHUMACHER, Karl-Heinz, D-67433 Neustadt (DE); BARWICH, Jürgen, D-67434 Neustadt (DE); FRICKE, Hans-Joachim, D-67246 Dirmstein (DE)
(86) Internationale Anmeldenummer: PCT/EP1997/006424
(87) Internationale Veröffentlichungsnummer: WO 1998/023656

(56) Entgegenhaltungen:
- WO-A-97/11996
- CHEMICAL ABSTRACTS, vol. 127, no. 2, 14.Juli 1997 Columbus, Ohio, US; abstract no. 18943k, XP002061177 & JP 09 087 597 A (OJI PAPER KK)
- CHEMICAL ABSTRACTS, vol. 126, no. 12, 24.März 1997 Columbus, Ohio, US; abstract no. 158253q, XP002061178 & JP 08 325 307 A (MITSUI TOATSU CHEM.)
- CHEMICAL ABSTRACTS, vol. 125, no. 16, 14.Oktober 1996 Columbus, Ohio, US; abstract no. 198091w, XP002061179 & JP 08 157 799 A (SHOWA HIGHPOLYMER)
- CHEMICAL ABSTRACTS, vol. 124, no. 4, 22.Januar 1996 Columbus, Ohio, US; abstract no. 31138j, XP002061180 & JP 07 238 201 A (TOA GOSEI KK)

## Beschreibung

Die Erfindung betrifft die Verwendung eines Polymerisats aufgebaut aus

| | |
|---|---|
| 5 bis 95 Gew.-% | eines Gemisches aus mindestens einem C₂- bis C₄-Alkylacrylat und mindestens einem C₆- bis C₁₂-Alkylacrylat (Monomere a), |
| 5 bis 30 Gew.-% | ethylenisch ungesättigten Verbindungen mit einer Glasübergangstemperatur oberhalb 0°C, welche, abgesehen von der ethylenisch ungesättigten Gruppe, keine weiteren funktionellen Gruppen enthalten (Monomere b) |
| 0 bis 10 Gew.-% | ethylenisch ungesättigten Verbindungen mit mindestens einer Säure- oder Säureanhydridgruppe (Monomere C) und |
| 0 bis 60 Gew.-% | weiteren ethylenisch ungesättigten Verbindungen (Monomere d), |

wobei die Gewichtsangaben auf das Polymerisat bezogen sind, oder der wäßrigen Dispersion dieses Polymerisats als Klebstoff für die Glanzfolien- oder Verbundfolienkaschierung, wobei Beschichtungen von Klebstoff beschichteten Polypropylenfolien mit abziehbaren Polyesterfilmen (polyester release film) ausgenommen sind und das Polymerisat beziehungsweise die Dispersion keine Vernetzer enthält.

Die Verwendung von wäßrigen Polymerdispersionen als Klebstoffe für die Herstellung von Laminaten, d.h. als Kaschierklebstoffe ist z.B. aus EP-A-6 224 34 oder WO 92/122 13 bekannt.

An Kaschierklebstoffe werden in der Praxis eine Vielzahl von unterschiedlichen Anforderungen gestellt. Z.B. ist gewünscht, daß Kaschierklebstoffe universell einsetzbar sind, d.h. sie sollen sich gleichermaßen für die Verklebung von unterschiedlichen Polymerfolien, z.B. aus Polyethylen (PE), orientiertem Propylen (OPP), Polyamid (PA) oder Polyethylenterephthalat (PETP) miteinander und auch für Verklebung von Polymerfolien mit Papier oder insbesondere auch mit Aluminiumfolien oder metallisierten Polymerfolien eignen.

Die Kaschierklebstoffe sollen zu Substraten eine gute Haftung aufweisen und nach der Kaschierung eine hohe Festigkeit der erhaltenen Laminate (Folienverbunde) bewirken.

Da die Folienverbunde oft transparent sind, müssen die Kaschierklebstoffe auch frei sein von feinem Koagulat sowie alterungs-, lichtbeständig und schaumarm sein.

Die Verarbeitung in den Kaschieranlagen setzt eine hohe Scherstabilität und gute Fließeigenschaften voraus. Darüberhinaus sind zur Vermeidung von Lösemittelabfällen und -emissionen grundsätzlich wäßrige Systeme gewünscht.

Insbesondere gewünscht ist eine hohe Sofortfestigkeit der hergestellten Verbunde. Eine hohe Sofortfestigkeit (Schälfestigkeit, gemessen unmittelbar nach der Herstellung des Verbundes) bietet den Vorteil, daß der Folienverbund rasch weiterverarbeitet werden kann. Diese Weiterverarbeitung kann die Herstellung eines Tripelverbundes ausgehend vom Zweifachverbund sein oder die weitere Konfektionierung des Verbundes (Schneiden, Stanzen, Falten, Siegeln).

Die bisher bekannten wäßrigen Polymerdispersionen erfüllen die an Kaschierklebstoffe gestellten Anforderungen noch nicht in ausreichendem Maße. Insbesondere ist die Sofortfestigkeit der Folienverbunde zu niedrig.

Demgemäß wurde die Verwendung des Polymerisats bzw. der wäßrigen Dispersion des Polymerisats als Klebstoff für die Herstellung von Laminaten, d.h. als Kaschierklebstoff gefunden.

Das Polymerisat ist aus den eingangs definierten Monomeren a) bis d) aufgebaut.

Bei den Monomeren a) handelt es sich um ein Gemisch aus mindestens einem C₂- bis C₄-Alkylacrylat und mindestens einem C₆-C₁₂ Alkylacrylat.

Als C₂- bis C₄-Alkylacrylat ist insbesondere n-Butylacrylat und Ethylacrylat zu nennen. Besonders bevorzugt ist n-Butylacrylat.

Als C₆- bis C₁₂-Alkylacrylat kommen z.B. n-Hexyl-, 2-Ethylhexyl-, Octyl, Decyl- oder Dodecylacrylat in Betracht.

Bevorzugt sind C₈-Alkylacrylate, insbesondere 2-Ethylhexylacrylat.

Der Anteil des C₂- bis C₄-Alkylacrylats beträgt vorzugsweise 10 bis 90 Gew.-%, besonders bevorzugt 20 bis 75 und ganz besonders bevorzugt 30 bis 70 Gew.-% und der Anteil der C₆-C₁₂ Alkylacrylate beträgt vorzugsweise 90 bis 10 Gew.-%, besonders bevorzugt 25 bis 80 und ganz besonders bevorzugt 30 bis 70 Gew.-%, wobei die Gewichtsangaben jeweils auf die Gesamtmenge der Monomeren a) bezogen sind.

Monomere a) haben eine Glasübergangstemperatur unterhalb 0°C.

Bei Monomeren b) handelt es sich um Monomere, welche neben der ethylenisch ungesättigten Gruppe keine weitere funktionelle Gruppe, d.h. keine Hydroxy-, Säure-, Säureanhydrid-, Nitro-, oder primäre, sekundäre odertertiäre Aminogruppe oder Epoxygruppen enthalten. Monomere b), d.h. die Homopolymere der Monomeren b), haben eine Glasübergangstemperatur oberhalb 0°C, vorzugsweise oberhalb 15°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Als Monomere b) zu nennen sind z.B. C₁-C₂₀-Alkyl(meth)acrylate, Vinylester von bis zu 20 C-Atome enthaltenden Carbonsäuren, Vinylaromaten mit bis zu 20 C-Atomen, ethylenisch ungesättigten Nitrile, Vinylhalogenide, sofern sie die oben angegebene Glasübergangstemperatur haben.

Geeignete (Meth)acrylsäurealkylester sind insbesondere Methylmethacrylat, Methylacrylat, n-Butylmethacrylat und tertiär-Butylacrylat.

Bevorzugt sind Methylacrylat, Methylmethacrylat und Butylmethacrylat.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Monomere c) sind z.B. ethylenisch ungesättigte Monomere mit Carbonsäuregruppen wie (Meth)acrylsäure, Maleinsäure, ethylenisch ungesättigte Säureanhydride oder Halbester, wie Maleinsäureanhydrid oder Maleinsäure- bzw. Fumarsäurehalbester im Polymer enthalten sein. Monomere mit Sulfonsäure- oder Sulfonatgruppen sind keine zwingenden Bestandteile des erfindungsgemäßen Polymerisats.

Weitere Monomere d) können beliebiger Art sein. Bevorzugt genannt seien z.B. C₁- bis C₁₀-Hydroxyalkyl (meth)acrylate oder unter Monomere b) aufgeführte Monomere mit einer Glasübergangstemperatur unter 0°C.

Das Polymerisat besteht vorzugsweise aus

| | | |
|---|---|---|
| 65 bis 95 | Gew.-% | Monomere a) |
| 5 bis 25 | Gew.-% | Monomere b) |
| 0 bis 10 | Gew.-% | Monomere c) |
| 0 bis 10 | Gew.-% | Monomere d) |

und besonders bevorzugt aus

| | | |
|---|---|---|
| 65 bis 92,5 | Gew.-% | Monomere a) |
| 5 bis 25 | Gew.-% | Monomere b) |
| 2,5 bis 10 | Gew.-% | Monomere c) |
| 0 bis 10 | Gew.-% | Monomere d) |

Die Glasübergangstemperatur des Polymerisats läßt sich nach üblichen Methoden wie Differentialthermoanalyse oder Differential Scanning Calorimetrie (s. z.B. ASTM 3418/82, sog. "midpoint temperature") bestimmen.

Die Glasübergangstemperatur des Polymeren liegt bevorzugt unter 60°C, insbesondere beträgt sie -50 bis +60°C, besonders bevorzugt -30 bis +40°C und ganz besonders bevorzugt -30 bis +20°C.

Die Herstellung des Polymeren erfolgt vorzugsweise durch Emulsionspolymerisation, es handelt sich daher um ein Emulsionspolymerisat.

Die Herstellung kann jedoch z.B. auch durch Lösungspolymerisation und anschließende Dispergierung In Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinanderverträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobemsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 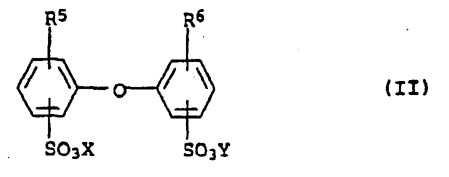 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50; Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen oxidationsmittel.

Bei der Oxidationskomponente handelt es sich z.B. um die bereits vorstehend genannten Initiatoren für die Emulsionspolymerisation.

Bei der Reduktionskomponent handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen-(II)sulfat/Natriumperoxidisulfat, tert-Butylhydroperoxid/Natriumdisulfk, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Bevorzugt wird das Polymerisat in Form seiner wäßrigen Dispersion verwendet.

Die Dispersion eignet sich als Kaschierklebstoff zum Verkleben von großflächigen Substraten, d.h. zur Herstellung von Laminaten.

Der Dispersion kann für die Verwendung als Kaschierklebstoff weitere übliche Zusatzstoffe, z.B. Netzmittel, Verdicker, Schutzkolloide, Lichtschutz-Stabilisatoren, Biozide enthalten.

Das Polymerisat bzw. die Dispersion benötigt nicht den Zusatz von weichmachenden Harzen (Tackifiern) von Weichmachern und auch nicht den Zusatz von Vernetzern, sonstigen Reaktivkomponenten oder Mischungskomponenten um die gewünschten Eigenschaften bei der Verwendung als Klebstoff zu erreichen.

Bei der Verwendung als Kaschierklebstoff wird die Dispersion auf die großflächigen Substrate vorzugsweise mit einer Schichtdicke von 0,1 bis 20, besonders bevorzugt 2 bis 7 g/m² z.B. durch Rakeln, Streichen etc. aufgetragen.

Nach kurzer Zeit zur Ablüftung der Dispersionswasser (vorzugsweise nach 1 bis 60 Sekunden) kann die das beschichtete Substrat dann mit einem zweiten Substrat kaschiert werden, wobei die Temperatur z.B. 20 bis 200, vorzugsweise 20 bis 70°C und der Druck z.B. 1 bis 30, vorzugsweise 3 bis 20 N/m² betragen kann.

Als Substrate eignen sich z.B. Polymerfolien, insbesondere aus Polyethylen, orientiertem Polypropylen, Polyamid, Polyethylenterephthalat, Polyacetat, Zellglas, mit Metall (z.B. Aluminium beschichtete (bedampfte) Polymerfolien (kurz: metallisierte Folien) oder auch Papier, Karton oder Metallfolien, insbesondere aus Aluminium. Die genannten Folien können auch z.B. mit Druckfarben bedruckt sein.

Das Polymerisat bzw. die Dispersion wird als Klebstoff für die Glanzfolienkaschierung und bevorzugt als Klebstoff für die Verbundfolienkaschierung verwendet.

Bei der Glanzfolienkaschierung werden Papier oder Karton mit transparenten Polymerfolien verklebt.

Bei der Verbundfolienkaschierung können die obengenannten Substrate (jedoch kein Papier oder Karton) miteinander verklebt werden. Unterschiedliche Polymerfolien können z.B. miteinander verklebt werden. Besonders gute Ergebnisse werden bei der Verklebung von Polymerfolien mit Metallfolien, z.B. Aluminium, oder metallisierten Folien erzielt.

Es ist ein Vorteil der Erfindung, daß unterschiedlichste Substrate miteinander verklebt, d.h. kaschiert werden können, wobei die erfindungsgemäße Dispersion eine gute Haftung an den Substraten aufweist und eine hohe Festigkeit des verklebten Verbundes bewirkt. Insbesondere ist die Sofortfestigkeit sehr hoch, wodurch z.B. eine schnelle Weiterverarbeitung ermöglicht wird.

### Beispiele

### I Herstellung von Emulsionspolymerisaten

Die Herstellung erfolgte gemäß folgender allgemeinen Vorschrift:

Die Vorlage (Zusammensetzung s. Tabelle 1) wurde auf 85°C (Innentemperatur) aufgeheizt. Danach wurde Zulauf 1 und Zulauf 2 gestartet.

Zulauf 2 bestand aus 3,0 g Natriumperoxodisulfat (Initiator) in 39,9 g Wasser

Zulauf 1 enthielt die emulgierte Monomerenmischung. Die Zusammensetzung des Zulaufs 2 ist ebenfalls in Tabelle 1 angegeben.

Zulauf 1 wurde in 3 h zudosiert. 20 % des Zulauf 2 wurde in 10 min, der Rest in 2 h 50 min (Fahrweise 1) oder in 3 h 20 min (Fahrweise 2) zugegeben. Nach Ende der Zuläufe wurde bei 85°C eine halbe Stunde auspolymerisiert.

Die Zusammensetzung der erhaltenen Emulsionspolymerisate 1 bis 13 ist in Tabelle 2 angegeben.

**Tabelle 1:**

| Zusammensetzung der Vorlage und des Zulauf 1 | | | | | | | | | | | | |
|---|---|---|---|---|---|---|---|---|---|---|---|---|
| Vorlage | | | | Zulauf 1 | | | | | | | | |
| | H₂O [g] | Styrolsaat 10% in Wasser [g] | Styrolsaat 33% in Wasser [g] | H₂O [g] | NLS 15% in Wasser [g] | IRA 60% in Wasser [g] | DOW 45% in Wasser [g] | Ar. 15% in Wasser [g] | t-DMK 100% [g] | DVB 100% [g] | Monomere 100% [g] | Fahrweise |
| 3 | 312 | 5 | | 448,2 | 13,3 | 6,7 | 14,4 | | 2,5 | | 1000 | 1 |
| 4 | 317,5 | 5 | | 447,7 | 13,3 | 6,7 | 14,4 | | 1,8 | | 1000 | 1 |
| 5 | 317,5 | 5 | | 447,8 | 13,3 | 6,7 | 14,4 | | 2 | | 1000 | 1 |
| 6 | 317,5 | 5 | | 447,7 | 13,3 | 6,7 | 14,4 | | 1,8 | | 1000 | 1 |
| 7 | 317,5 | 5 | | 447,7 | 13,3 | 6,7 | 14,4 | | 1,8 | | 1000 | 1 |
| 8 | 317,5 | 5 | | 418,6 | | 6,7 | 14,4 | 53,3 | 1,8 | | 1000 | 1 |
| 9 | 317,5 | 5 | | 447,4 | 13,3 | 6,7 | 14,4 | | 1,8 | | 1000 | 1 |
| 10 | 317,5 | 5 | | 447,7 | 13,3 | 6,7 | 14,4 | | 1,8 | | 1000 | 1 |
| 11 | 317,5 | 5 | | 447,7 | 13,3 | 6,7 | 14,4 | | 0,22 | | 1000 | 1 |
| 12 | 317,5 | 5 | | 447,7 | 13,3 | 6,7 | 14,4 | | 0,22 | | 1000 | 1 |
| 13 | 317,5 | 5 | | 447,7 | 13,3 | 6,7 | 14,4 | | 0,22 | | 1000 | 1 |

| | | | | | | | | | | | | |
|---|---|---|---|---|---|---|---|---|---|---|---|---|
| Abkürzungen NLS: Natriumlaurylsulfat Dow: Dowfax 2A1 t-DMK: t-Dodecylmercaptan IRA: Lumiten IRA Ar.: Arylsulfonat DVB: Divinylbenzol | | | | | | | | | | | | |

**Tabelle 2:**

| Zusammensetzung der Emulsionspolymerisate in Gew.-% | | | | | | | | | |
|---|---|---|---|---|---|---|---|---|---|
| | AS | IS | GMA | HEA | BA | MA | MMA | EHA | S |
| 3 | 3 | | | | 56 | | 8 | 28 | 5 |
| 4 | 3 | | | | 56 | | 10 | 28 | 3 |
| 5 | 3 | | | | 51 | | | 33 | 13 |
| 6 | 3 | | | | 46 | | | 38 | 13 |
| 7 | 3 | | | | 43 | | | 41 | 13 |
| 8 | 3 | | | | 46 | | | 38 | 13 |
| 9 | 3 | | | | 46 | 13 | | 38 | |
| 10 | 3 | | | | 51 | | | 33 | 13 |
| 11 | 3 | | | | 51 | | | 33 | 13 |
| 12* | 3 | | | | - | | | 84 | 13 |
| 13* | 3 | | | | 84 | | | - | 13 |

| | | | | | | | | | |
|---|---|---|---|---|---|---|---|---|---|
| Abkürzungen * zum Vergleich AS: Acrylsäure MA: Methylacrylat IS: Ithaconsäure MMA: Methylmethacrylat GMA: Glycidylmethacrylat EHA: Ethylhexylacrylat HEA: 2-Hydroxyethylacrylat S: Styrol BA: n-Butylacrylat | | | | | | | | | |

### II Anwendungstechnische Prüfungen

### A) Verbundfolien

### Herstellung der Verbundfolien und Bestimmung der Schälfestigkeit

Die Dispersionen der Emulsionspolymerisate wurden mit einer Trockenschichtdicke von 2-3 g/m² auf verschiedene auf 50°C erwärmte Folien (Polyethylenterephthalat: PETP; Polyamid: PA; Polypropylen (corona-vorbehandelt): PP, Aluminium: Alu) gerakelt, und nach 20 Sekunden mit einer Polyethylenfolie, corona-vorbehandelt (PE) kaschiert. Anschließend wurden die erhaltenen Folienverbunde 1 Tage bei Raumtemperatur und Normalklima gelagert und danach in 15 mm breite Streifen zerschnitten. Diese Streifen wurden dann bei 23°C im Winkel von 180° mit einer Geschwindigkeit von 100 m/min abgezogen. Es wurde die Schälkraft in N bei den 15 mm breiten Streifen bestimmt. Ergebnisse finden sich in Tabelle 3.

**Tabelle 3: Schälfestigkeiten in N/15 mm**

| Polymerisat | PETP/PE | PA/PE | PP/BE | Alu/PE | PETP/Alu | metall.PETP/PE* |
|---|---|---|---|---|---|---|
| 3 | 2,7 | 3,0 | 2,8 | 4,5 | 4,0 | 3,2 |
| 4 | 3,8 | 3,7 | 3,0 | 4,5 | 5,1 | 3,1 |
| 5 | 3,1 | 3,0 | 2,4 | 4,7 | 4,0 | 2,9 |
| 6 | 2,3 | 3,2 | 2,4 | 3,0 | 3,4 | 2,5 |
| 7 | 2,8 | 3,0 | 2,7 | 3,7 | 3,7 | 2,3 |
| 8 | 2,9 | 3,0 | 2,5 | 3,8 | 3,3 | 3,0 |
| 9 | 3,2 | 3,2 | 2,3 | 3,8 | 3,0 | 2,7 |
| 10 | 2,5 | 2,6 | 2,0 | 3,7 | 2,2 | 1,4 |
| 11 | 2,9 | 3,3 | 2,7 | 3,8 | 3,6 | 3,1 |
| 12 | 0,5 | 0,6 | 0,7 | 1,3 | 1,3 | 0,6 |
| 13 | 2,2 | 2,5 | 2,1 | 3,1 | 3,8 | 1,8 |

| | | | | | | |
|---|---|---|---|---|---|---|
| * mit Metall bedampfte PETP-Folie | | | | | | |

### Bestimmung der Sofortfestigkeit

Als Vorteil der erfindungsgemäßen Dispersionen ist auch eine hohe Sofortfestigkeit der hergestellten Verbunde zu sehen. Diese hohe Sofortfestigkeit (Schälfestigkeit, gemessen unmittelbar nach der Herstellung des Verbundes) bietet den Vorteil, daß der Folienverbund rasch weiterverarbeitet werden kann. Diese Weiterverarbeitung kann die Herstellung eines Tripelverbundes ausgehend vom Zweifachverbund sein oder die weitere Konfektionierung des Verbundes (Schneiden, Stanzen, Falten, Siegeln). Als Vergleichsbeispiel ist ein 2K-System angeführt, wobei es sich um eine Acrylpolymerdispersion (Acronal® DS 3480) handelt, welche einen Isocyanatvernetzer enthält.

| Sofortfestigkeit | | | | | |
|---|---|---|---|---|---|
| Polymerisat | PETP/PE | PA/PE | PP/PE | ALU/PE | PETP/ALU |
| 3 | 1,5 | 2,0 | 2,0 | 3,0 | 2,4 |
| Acronal DS 3480 X | 0,2 | 0,4 | 0,3 | 1,4 | 0,7 |

### B) Glanzfolien

### Herstellung von Polymerisatdispersionen 14 und 15

| Polymerisat 14 | | |
|---|---|---|
| Vorlage: | | |
| | 312,0 g Wasser | |
| 0,05 % | 5,0 g Styrolsaat | 10,0 %ig |

| Zulauf 1: | | |
|---|---|---|
| | 449,5 g Wasser | |
| 0,20 % | 13,3 g Steinapol NLS | 15,0 %ig |
| 0,40 % | 8,0 g Lumiten IRA | 50,0 %ig |
| 0,65 % | 14,4 g-Dowfax 2A1 | 45,0 %ig |
| 0,10% | 4,0 g NaOH | 25,0 %ig |
| 3,00 % | 30,0 g Acrylsäure | 100,0 %ig |
| 56,00 % | 560,0 g n-Butylacrylat | 100,0 %ig |
| 5,00 % | 50,0 g Styrol | 100,0 %ig |
| 8,00 % | 80,0 g Methylmethacrylat | 100,0 %ig |
| 28,00 % | 280,0 g 2-Ethylhexylacrylat | 100,0 %ig |

| Zulauf 2: | | |
|---|---|---|
| 0,30 % | 3,0 g Natriumperoxodisulfat | 100,0 %ig |
| | 39,9 g Wasser | |
| Fahrweise: Vorlage auf 85°C aufheizen | | |
| Bei 85°C Zuläufe gleichzeitig starten | | |
| Zulaufzeit: Zulauf 1 in 3 h | | |
| Zulauf 2: 20 % in 10 min, Rest in 2 h 50 min | | |
| Nach Zulauf-Ende 0,5 h bei 85°C Innentemp. auspolym. | | |
| mit NaOH auf pH = 7-8 stellen | | |

| Polymerisat 15 | | |
|---|---|---|
| Vorlage: | | |
| | 312,0 g Wasser | |
| 0,05% | 5,0 g Styrolsaat | 10,0 %ig |

| Zulauf 1: | | |
|---|---|---|
| | 451,6 g Wasser | |
| 0,20 % | 13,3 g Steinapol NLS | 15,0 %ig |
| 0,40 % | 8,0 g Lumiten IRA | 50,0 %ig |
| 0,65 % | 14,4 g Dowfax 2A1 | 45,0 %ig |
| 3,00 % | 30,0 g Acrylsäure | 100,0 %ig |
| 56,00 % | 560,0 g n-Butylacrylat | 100,0 %ig |
| 5,00 % | 50,0 g Styrol | 100,0 %ig |
| 8,00 % | 80,0 g Methylmethacrylat | 100,0 %ig |
| 28,00 % | 280,0 g 2-Ethylhexylacrylat | 100,0 %ig |

| Zulauf 2: | | |
|---|---|---|
| 0,30 % | 3,0 g Natriumperoxodisulfat | 100,0 %ig |

| Polymerisat 15 | | |
|---|---|---|
| Zulauf 2: | | |
| | 39,9 g Wasser | |
| Fahrweise: Vorlage auf 85°C aufheizen | | |
| Bei 85°C Zuläufe gleichzeitig starten | | |
| Zulaufzeit:Zulauf 1 in 3 h | | |
| Zulauf 2: 20 % in 10 min, Rest in 2 h 50 min | | |
| Nach Zulauf-Ende 0,5 h bei 85°C Innentemp. auspolym. | | |
| mit NaOH auf pH = 7-8 stellen | | |

### Glanzfolienkaschierung mit Karton und Polypropylen (Corona-vorbehandelt)

Die vorbehandelte Seite der Polypropylenfolie wurde mit Klebstoff beschichtet. Nach dem Trocknen mit Kaltluft wurde der Karton aufgelegt und mit einer Laborkaschierrolle angerollt. Die zugeschnittenen Kaschierungen wurden in der Rollenpresse gepreßt.

Die Haftung wurde durch Abziehen der Folie vom Karton im Winkel von ca. 180 Grad geprüft.

### Auswertung:

1 = Vollflächiger Papier- oder Farbausriß
2 = Teilweiser Papier- oder Farbausriß
3 = Gute Haftung mit Adhäsionsbruch Karton oder Folie (AK, AF)
4 = Schwache Haftung mit AK oder AF
5 = Keine Haftung auf Karton oder Folie

Zur Bestimmung der Nutstandfestigkeit wurden die kaschierten Proben 24 Stunden nach der obigen Herstellung genutet.

### Beurteilung der Nutung:

1 = Nut ist vollständig in Ordnung
2 = Nut ist nur an vereinzelten Stellen leicht geöffnet
3 = Nut ist an einzelnen Stellen deutlich geöffnet
4 = Nut ist vollständig offen

Ergebnisse sind in Tabelle 4 zusammengefaßt.

**Tabelle 4**

| Polymerisiert | Haftung | | | Nutung | | |
|---|---|---|---|---|---|---|
| | nach 1 Tag | nach 1 Woche | nach 6 Wochen | nach 1 Tag | nach 1 Woche | nach 6 Wochen |
| 14 | 3 | 2-3 | 2-3 | 1 | 1 | 1 |
| 15 | 2 | 2 | 2 | 1 | 1 | 1 |

## Patentansprüche

1. Verwendung eines Polymerisats aufgebaut aus
| | |
|---|---|
| 5 bis 95 Gew.-% | eines Gemisches aus mindestens einem C₂-C₄-Alkylacrylat und mindestens einem C₆ bis C₁₂ Alkylacrylat (Monomere a), |
| 5 bis 30 Gew.-% | ethylenisch ungesättigten Verbindungen mit einer Glasübergangstemperatur oberhalb 0°C, welche, abgesehen von der ethylenisch ungesättigten Gruppe, keine weiteren funktionellen Gruppen enthalten (Monomere b) |
| 0 bis 10 Gew.-% | ethylenisch ungesättigten Verbindungen mit mindestens einer Säure- oder Säureanhydridgruppe (Monomere c) und |
| 0 bis 60 Gew.-% | weiteren-ethylenisch ungesättigten Verbindungen (Monomere d), |
wobei die Gewichtsangaben auf das Polymerisat bezogen sind, oder der wäßrigen Dispersion dieses Polymerisats als Klebstoff für die Glanzfolien- oder Verbundfolienkaschierung, wobei Beschichtungen von Klebstoff beschichteten Polypropylenfolien mit abziehbaren Polyesterfilmen (polyester release film) ausgenommen sind und das Polymerisat beziehungsweise die Dispersion keine Vernetzer enthält.

2. Verwendung gemäß Anspruch 1, wobei Monomere a) aus 10 bis 90 Gew.-% C₂-C₄-Alkylacrylaten und 90 bis 10 Gew.-% C₆-C₁₂ Alkylacrylaten bestehen

3. Verwendung gemäß Anspruch 1 oder 2, wobei das Polymerisat aufgebaut ist aus
| | | |
|---|---|---|
| 65 bis 95 | Gew.-% | Monomere a) |
| 5 bis 25 | Gew.-% | Monomere b) |
| 0 bis 10 | Gew.-% | Monomere c) |
| 0 bis 10 | Gew.-% | Monomere d) |

4. Verwendung gemäß einem der Ansprüche 1 bis 3, wobei das Polymerisat aufgebaut ist aus
| | | |
|---|---|---|
| 65 bis 92,5 | Gew.-% | Monomere a) |
| 5 bis 25 | Gew.-% | Monomere b) |
| 2,5 bis 10 | Gew.-% | Monomere c) |
| 0 bis 10 | Gew.-% | Monomere d) |

5. Verwendung gemäß einem der Ansprüche 1 bis 4, wobei das Polymerisat durch Emulsionspolymerisation der Monomeren in Gegenwart von 0,05 bis 0,8 Gew.-Teilen eines Reglers, bezogen auf 100 Gew.-Teile der zu polymerisierenden Monomeren, hergestellt wird.

## Claims

1. The use of a polymer composed of
| | |
|---|---|
| from 5 to 95% by weight | of a mixture of at least one C₂-C₄-alkyl acrylate and at least one C₆-C₁₂-alkyl acrylate (monomers a), |
| from 5 to 30% by weight | of ethylenically unsaturated compounds having a glass transition temperature of above 0°C and containing no functional groups other than the ethylenically unsaturated group (monomers b) |
| from 0 to 10% by weight | of ethylenically unsaturated compounds having at least one acid group or acid anhydride group (monomers c), and |
| from 0 to 60% by weight | of further ethylenically unsaturated compounds (monomers d), |
the figures by weight being based on the polymer, or of the aqueous dispersion of this polymer as an adhesive for high-gloss lamination or composite-film lamination, excluding coatings of adhesive-coated polypropylene films with polyester release films, and the polymer or dispersion not comprising any crosslinkers.

2. The use according to claim 1, where monomers a) consist of from 10 to 90% by weight of C₂-C₄-alkyl acrylates and from 90 to 10% by weight of C₆-C₁₂-alkyl acrylates.

3. The use according to claim 1 or 2, wherein the polymer is composed of
| | | |
|---|---|---|
| from 65 to 95 | % by weight | of monomers a) |
| from 5 to 25 | % by weight | of monomers b) |
| from 0 to 10 | % by weight | of monomers c) |
| from 0 to 10 | % by weight | of monomers d) |

4. The use according to any of claims 1 to 3, wherein the polymer is composed of
| | | |
|---|---|---|
| from 65 to 92.5 | % by weight | of monomers a) |
| from 5 to 25 | % by weight | of monomers b) |
| from 2.5 to 10 | % by weight | of monomers c) |
| from 0 to 10 | % by weight | of monomers d) |

5. The use according to any of claims 1 to 4, wherein the polymer is prepared by emulsion polymerization of the monomers in the presence of from 0.05 to 0.8 parts by weight of a regulator per 100 parts by weight of the monomers to be polymerized.

## Revendications

1. Utilisation d'un polymère constitué
| | |
|---|---|
| de 5 à 95 % | en poids d'un mélange d'au moins un acrylate d'alkyle en C₂-C₄ et d'au moins un acrylate d'alkyle en C₆-C₁₂ (monomères a), |
| de 5 à 30 % | en poids de composés éthyléniquement insaturés présentant une température de transition vitreuse supérieure à 0°C, qui, en dehors du groupe éthyléniquement insaturé, ne contiennent pas d'autres groupes fonctionnels (monomères b), |
| de 0 à 10 % | en poids de composés éthyléniquement insaturés comportant au moins un groupe acide ou anhydride (monomères c), et |
| de 0 à 60 % | en poids d'autres composés éthyléniquement insaturés (monomères d), |
les indications en poids se rapportant au polymère, ou de la dispersion aqueuse de ce polymère, comme adhésif pour le contrecollage de feuilles brillantes ou de feuilles composites, des recouvrements de feuilles de polypropylène enduites d'adhésif avec des films de polyester pelables (polyester release film) étant exclus et le polymère ou respectivement la dispersion ne contenant aucun agent de réticulation.

2. Utilisation suivant la revendication 1, dans laquelle des monomères a) sont constitués de 10 à 90 % en poids d'acrylates d'alkyle en C₂-C₄ et de 90 à 10 % en poids d'acrylates d'alkyle en C₆-C₁₂.

3. Utilisation suivant la revendication 1 ou 2, dans laquelle le polymère est constitué
de 65 à 95 % en poids de monomères a),
de 5 à 25 % en poids de monomères b),
de 0 à 10 % en poids de monomères c),
de 0 à 10 % en poids de monomères d).

4. Utilisation suivant l'une des revendications 1 à 3, dans laquelle le polymère est constitué
de 65 à 92,5 % en poids de monomères a),
de 5 à 25 % en poids de monomères b),
de 2,5 à 10 % en poids de monomères c),
de 0 à 10 % en poids de monomères d).

5. Utilisation suivant l'une des revendications 1 à 4, dans laquelle le polymère est préparé par polymérisation en émulsion des monomères en présence de 0,05 à 0,8 partie en poids d'un agent de régulation, par rapport à 100 parties en poids des monomères à polymériser.
